Europäisches Patentamt

European Patent Office

Office européen des brevets

(19)

(11) Veröffentlichungsnummer: **0 281 997 B1**

(12) **EUROPÄISCHE PATENTSCHRIFT**

(45) Veröffentlichungstag der Patentschrift: **02.10.91**

(51) Int. Cl.⁵: **B28D 1/14, E21B 10/44**

(21) Anmeldenummer: **88103599.2**

(22) Anmeldetag: **08.03.88**

(54) Gesteinsbohrer.

(30) Priorität: **11.03.87 DE 3707798**

(43) Veröffentlichungstag der Anmeldung:
**14.09.88 Patentblatt 88/37**

(45) Bekanntmachung des Hinweises auf die
Patenterteilung:
**02.10.91 Patentblatt 91/40**

(84) Benannte Vertragsstaaten:
**CH DE FR GB IT LI**

(56) Entgegenhaltungen:
**DE-A- 3 020 284**
**DE-B- 1 193 899**
**FR-A- 783 708**
**US-A- 1 324 631**
**US-A- 2 051 525**

(73) Patentinhaber: **Hawera Probst GmbH + Co.**
**Schützenstrasse 77**
**W-7980 Ravensburg(DE)**

(72) Erfinder: **Moser, Bernhard**
**Ulrichstr. 31**
**W-7963 Althausen(DE)**

(74) Vertreter: **Patentanwälte Dipl.-Ing. E. Eisele**
**Dr.-Ing. H. Otten**
**Seestrasse 42**
**W-7980 Ravensburg(DE)**

## Beschreibung

Die Erfindung betrifft einen Gesteinsbohrer nach dem Oberbegriff des Anspruchs 1.

Gesteinsbohrer mit Hartmetall-Schneidplatten werden zur Herstellung von Bohrungen in Beton, Mauerwerk, Gestein oder dgl. verwendet. Zur Herstellung derartiger Bohrwerkzeuge werden grundsätzlich Rundmaterialien als Ausgangsbasis verwendet, da der drehende Einsatz grundsätzlich einen Kreisquerschnitt erfordert. Demzufolge weist sowohl der Bohrerkopf als auch der in das Bohrerloch einzudringende Spiralgang bei bekannten Werkzeugen einen kreisförmigen Querschnitt auf (siehe z. B. DE 30 20 284 Al). Dies liegt nicht zuletzt auch daran, daß die zylindrische Außenkontur von Bohrerkopf und Spiralgang einfach herstellbar ist. Je nach Bauart des Gesteinsbohrers wird der Kopf vor und/oder nach dem Einsetzen und Einlöten der Hartmetall-Schneidplatte bzw. von Kreuzschneiden angeschliffen, um eine angepaßte Geometrie zu der Schneidplatte bzw. der Kreuzschneide und Bohrmehlnuten im Bereich des Bohrerkopfes zu schaffen. Hierbei wird jedoch die grundsätzlich kreiszylindrische Bauart des Bohrerkopfes beibehalten, obwohl der Bohrerkopf bei Gesteinsbohrern nicht als Schneidelement, sondern nur als tragendes Element für die Schneidplatten fungiert. In diesem Zusammenhang hat der Bohrerkopf die wichtige Aufgabe, eine optimale Abstützung der Hartmetall-Schneidplatte bzw. der Kreuzschneide zu schaffen. Die Herstellung der Bohrmehlnuten im Bohrerkopf hat Jedoch oftmals eine starke Abschwächung des Bohrerkopfquerschnitts zur Folge, was zu einem Ausbrechen der Hartmetall-Schneidplatten bei einer starken Beanspruchung des Bohrwerkzeugs führt. Das Bohrwerkzeug wird damit unbrauchbar.

Die Abstützung der Schneidplatten von Gesteinsbohrern geschieht bei bekannten Bohrwerkzeugen dadurch, daß man den Querschnitt des Bohrerkopfes im Bereich der Einstichnut für das Schneidelement möglichst ungeschwächt beläßt, d. h. wenig Materialabtrag durch Anschleifen durchführt (siehe DE 30 20 284 Al). Hierdurch ergibt sich eine gute Rückenabstützung der Schneidelemente. Dies hat Jedoch den Nachteil, daß infolge des kreisförmigen Querschnitts des Bohrerkopfes wenig oder kein Spanraum für das abzutransportierende Bohrmehl zur Verfügung steht, so daß zusätzliche Bohrmehlnuten in den Bohrerkopf eingebracht werden müssen. Diese Bohrmehlnuten schwächen Jedoch den Bohrerkopf in seinem Gesamtquerschnitt, so daß eine erhöhte Bruchgefahr besteht. Außerdem wird durch den Anschliff des Bohrkopfes im Bereich der Schneidelemente eine Kopfgeometrie erzeugt, die zu einem Verhaken des Bohrerkopfes bei schwierigen Bohrungen wie z. B. Bohren in kluftigem Gestein und Armierungsbohrungen führen kann.

Der Erfindung liegt die Aufgabe zugrunde, einen Gesteinsbohrer vorzuschlagen, die vorgenannten Nachteile nicht aufweist uund insbesondere eine optimale Festigkeit des Bohrerkopfes und eine größtmögliche Abstützung der Hartmetall-Schneidplatte bzw. Hartmetall-Schneidplatten gewährleistet, ohne daß der Bohrerquerschnitt im Bereich des Bohrerkopfes durch Einbringen von zusätzlichen Bohrmehlnuten geschwächt ist. Weiterhin soll ein Verhaken des Bohrerkopfes bei schwierigen Bohrsituationen vermieden werden.

Diese Aufgabe wird ausgehend von einem Gesteinsbohrer der einleitend bezeichnenden Art erfindungsgemäß durch die kennzeichnenden Merkmale des Anspruchs 1 gelöst.

Durch die in den Unteransprüchen aufgeführten Maßnahmen ist eine vorteilhafte und zweckmäßige Weiterbildung des im Hauptanspruch angegebenen Gesteinsbohrers möglich.

Der Erfindung liegt die Erkenntnis zugrunde, daß der üblicherweise verwendete kreisförmige Querschnitt des Bohrerkopfes zur Abstützung der Schneidplatte nicht notwendig ist, da die Kreisform nur eine unwesentlich höhere Abstützkraft im Bereich der Nuten für die Schneidelemente gegenüber einer Abflachung dieses Bereichs mit sich bringt. Demzufolge wird gemäß der vorliegenden Erfindung der Querschnitt des Bohrerkopfes nicht kreisförmig sondern quadratisch ausgebildet, d. h. vom kreisförmigen Querschnitt werden vier Kreissegmente abgetragen, was zur Bildung von Bohrmehlnuten führt. In dem quadratischen Grundquerschnitt des Bohrerkopfes wird dann die Hartmetall-Schneidplatte oder die Kreuzschneiden derart eingesetzt, daß sie entweder diagonal zu den Eckbereichen des Quadrats oder senkrecht zu den Seitenflächen ausgerichtet sind. Hierdurch ergibt sich ein optimal verstärkter Querschnitt gegen Bruch im Schlitzgrund, wobei durch die Abflachungen zur Bildung des quadratförmigen Querschnitts Bohrmehlnuten entstehen. Es sind deshalb keine zusätzlichen Einschnitte zur Bildung einer Bohrmehlnut im Bohrerkopf notwendig, so daß eine Querschnittsschwächung des Bohrerkopfes durch Bohrmehlnuten unterbleibt.

Wie Versuche gezeigt haben, wird mit dem erfindungsgemäßen Bohrwerkzeug auch ein Verhaken des Bohrerkopfes in schwierigen Materialien, wie kluftigem Gestein und Armierungsbohrungen vermieden bzw. gegenüber herkömmlichen Bohrern verbessert.

Aus der US-A-2 051 525 ist zwar ein Bohrwerkzeug mit einem rechteckförmigen Querschnitt des Bohrerkopfes bekannt geworden. Hierbei handelt es sich jedoch nicht um einen üblichen, zwischen Bohrerkopf und Bohrerschaft einstückigen Gesteinsbohrer aus Rundmaterial mit Bohrerkopf und spiralförmigem Bohrerschaft, wobei im Bohrerkopf Hartmetall-Schneidplatten eingesetzt sind, sondern um einen zylindrischen Werkzeugschaft, welchem ein Hartmetall-Bohrkopfaufsatz als Bohrerkopf aufgeschraubt ist. Ein solcher Bohrerkopf hat demzufolge keine Übergangsnuten von Bohrerkopf zur Spiralwendel. Eine Bruchgefährdung des Bohrerkopfes durch Querschnittsschwächung liegt nicht vor.

In Weiterbildung der Erfindung nach Unteranspruch 2 werden die Seitenflächen des Bohrerkopfes unterschiedlich tief eingeschliffen, so daß die Abstützung der Hauptschneide mittels zwei gegenüberliegenden, radial weiter außen liegenden Seitenflächen erfolgt, während die beiden übrigen gegenüberliegenden Seitenflächen weiter radial nach innen versetzt sind. Durch diesen leicht rechteckförmigen Querschnitt des Bohrerkopfes entstehen vor den Hauptschneiden vergrößerte Bohrmehlnuten zum Abtransport des Bohrmehls. Da die Nebenschneiden einer Kreuzschneide weniger beansprucht sind, reicht diese Abstützung durch den Bohrerkopf für diese axial zurückversetzten Schneiden aus.

Gemäß der Weiterbildung der Erfindung nach Unteranspruch 3 kann die Schneidplatte oder die Kreuzschneide auch senkrecht zu den ebenen Seitenflächen des Bohrerkopfes ausgerichtet sein. In diesem Fall muß Jedoch ebenfalls der Außenkreisdurchmesser der Hartmetall-Schneidelemente größer sein als der Außenkreisdurchmeser durch die Eckpunkte des quadratischen Querschnittes des Bohrerkopfes. Bei dieser Bauart ragen deshalb die Schneidelemente wesentlich weiter über die Seitenflächen des Bohrerkopfes hinaus, so daß sich unmittelbar vor den Schneidelementen ein vergrößerter Spanraum bzw. eine vergrößerte Bohrmehlnut ergibt. Allerdings ist die Abstützwirkung der Schneidelemente im äußeren Endbereich weniger stark als bei der Anordnung dieser Schneidelemente in Richtung zu den Eckbereichen des quadratischen Querschnitts des Bohrerkopfes.

Bei dem erfindungsgemäßen Bohrwerkzeug mit quadratischem oder nahezu quadratischem Querschnitt des Bohrerkopfes hat es sich gemäß der Weiterbildung nach Unteranspruch 4 als vorteilhaft erwiesen, wenn das axial zurückversetzte Schneidelemente einer Kreuzschneide in ihrem oberen Bereich abgeflacht ausgebildet ist. Hierdurch wird die Auflagefläche der Kreuzschneide insbesondere bei schlagender Beanspruchung verkleinert, so daß sich der Schlagdruck auf die axial vorstehende Hauptschneide des Kreuzschneidelements wesentlich erhöht. So wird der Vorteil des Einschneidenwerkzeugs mit hohem Anpressdruck vorteilhaft kombiniert mit dem gleichmäßigen Rundlauf einer Kreuzschneide.

Gemäß der Weiterbildung der Erfindung nach Unteranspruch 5 können anstelle der axial zurückversetzten Nebenschneide eines Kreuzschneidelements Schneidstifte eingesetzt werden. Derartige Schneidstifte sind beispielsweise aus der DE-AI-2 528 003 bekannt. Dabei wird der quadratische Querschnitt des Bohrerkopfes grundsätzlich beibehalten, so daß sich die zuvor beschriebenen Vorteile auch hier einstellen.

Weitere erfindungswesentliche Merkmale sind in den nachfolgenden vorteilhaften und zweckmäßigen Ausführungsbeispielen der Erfindung beschrieben und in der Zeichnung dargestellt. Es zeigen

Fig. 1    eine Ansicht des erfindungsgemäßen Bohrwerkzeugs,

Fig. 2    eine Draufsicht bzw. Stirnansicht der Darstellung nach Fig. 1, jedoch in vergrößerter Ansicht,

Fig. 3    eine Seitenansicht der Darstellung nach Fig. 1 (Drehung um 90°),

Fig. 4    eine Draufsicht der Darstellung nach Fig. 3, jedoch mit Variation der Seitenflächen,

Fig. 5    eine Variante der Anordnung der Schneidelemente mit senkrecht zu den Seitenflächen stehenden Schneidelementen,

Fig. 6    eine Ausführungsvariante des Gesteinsbohrers in Seitenansicht mit Schneidstiften und

Fig. 7    eine Draufsicht der Darstellung nach Fig. 6.

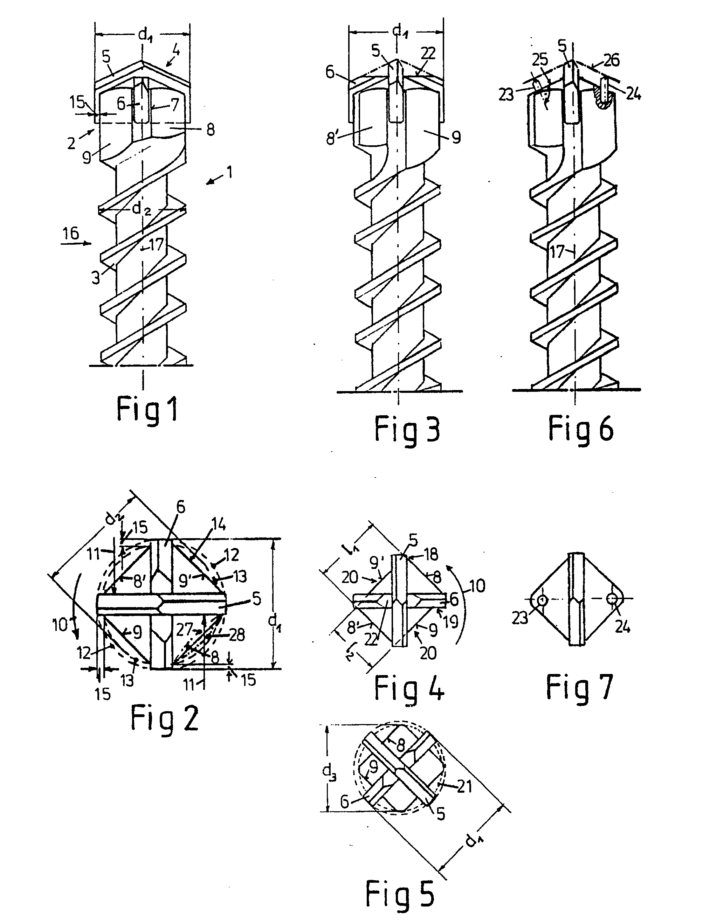

Der in Fig. 1 in Ansicht dargestellte Gesteinsbohrer (1) besteht aus einem Bohrerkopf (2) und einem eingängigen oder zweigängigen Spiralschaft (3). Der Bohrerkopf (2) ist mit einer Kreuzschneide (4) versehen, bestehend aus der axial in Bohrrichtung nach vorne versetzten Hauptschneide (5) und der axial in Bohrrichtung zurückversetzten Nebenschneide (6). Die Kreuzschneide (4) ist in Nuten (7) des Bohrerkopfes in an sich bekannter Weise eingelötet. Die V-förmige oder dachförmige Ausbildung der Haupt- und Nebenschneiden bilden einen stumpfen Winkel.

Wie in Fig. 1 in Verbindung mit Fig. 2 dargestellt, weist der Bohrerkopf (2) einen quadratischen Querschnitt mit den ebenen, zur Längsachse (17) des Bohrers parallel ausgerichtete Seitenflächen (8) bzw. (8') zur Abstützung der Hauptschneide und den senkrecht hierzu angeordneten Seitenflächen (9) bzw. (9') zur Abstützung der Nebenschneide (6) auf. Die Drehrichtung des Bohrwerkzeugs ist mit Pfeil (10) gekennzeichnet. Mit den Pfeilen (11) ist die Abstützkraft symbolisch dargestellt, mit welcher der Bohrerkopf die Hauptschneide (5) abstützen muß.

Der in Fig. 1 mit $d_1$ dargestellte Außenkreisdurchmesser der Kreuzschneide (4) ist in Fig. 2 mit dem Umkreis (12) gekennzeichnet. Der in Fig. 1 dargestellte Spiralschaftdurchmesser $d_2$ ist in Fig. 2 mit dem Umkreis (13) dargestellt. Selbstverständlich muß der Außendurchmesser $d_1$ der Kreuzschneide (4) gegenüber dem Durchmesser $d_2$ der Spiralnut größer sein.

Infolge des quadratischen Querschnitts des Bohrerkopfes mit den Seitenflächen (8) bzw. (8') und (9) bzw. (9') entsteht zwischen diesen Flächen und dem Umkreis (12) ein Spanraum (14) bzw. eine Bohrmehlnut (14), die zum Abtransport des Bohrmehls dient. Wäre der Bohrerkopf zylindrisch ausgebildet, so würde er eine Außenkontur entsprechend dem Umkreis (13) annehmen, was dem Spiralschaftdurchmesser $d_2$ entspricht. Durch die Abflachung der Seitenflächen (8) bzw. (9) entsteht deshalb ein zusätzlicher Spanraum, wodurch ein Einschnitt bzw. Einschleifen einer sparaten Bohrmehlnut nicht notwendig ist.

Wie aus Fig. 2 ersichtlich, sind die Seitenflächen (8, 8') bzw. (9, 9') derart angeordnet, daß sie nahezu mit den äußeren Eckbereichen der Hauptschneide (5) bzw. Nebenschneide (6) fluchten, so daß sich nur ein kleiner Überstandsbereich (15) als wirksame Schneidkante ergibt.

Die Darstellung nach Fig. 3 ist eine Seitenansicht entsprechend dem Pfeil (16) in Fig. 1. Gleiche Teile sind mit gleichen Bezugzeichen gekennzeichnet. Durch Drehung des Gesteinsbohrers erscheinen die Seitenflächen (8' und 9). Die Seitenflächen (8, 8') bzw. (9, 9') sind stets parallel zur Bohrerlängsachse (17) ausgerichtet.

Gemäß der Darstellung der Erfindung in Fig. 4 unterscheiden sich die Seitenflächen (8) bzw. (8') zur Abstützung der Hauptschneide (5) von den Seitenflächen (9) bzw. (9') zur Abstützung der Nebenschneide (6) des Kreuzschneidelements (4). Dabei sind die Seitenflächen (8) bzw. (8') radial möglichst weit außen entsprechend der Darstellung in Fig. 2 angeordnet, um möglichst mit den Eckbereichen (18) der Hauptschneide (5) zu fluchten. Der Abstand zwischen den Seitenflächen (8) bzw. (8') ist mit $1_1$ bezeichnet. Demgegenüber sind die beiden Seitenflächen (9) bzw. (9') zur Abstützung der Nebenschneide (6) radial nach innen versetzt, so daß die Abstützung hinter der Nebenschneide (6) in den Eckbereichen (19) nicht entsprechend stark ausgeführt ist wie bei der Hauptschneide (5). Der Abstand der Seitenflächen (9, 9') ist mit $1_2$ gekennzeichnet. Der Abstand $1_1$ ist demnach größer als der Abstand $1_2$ Hierdurch ergibt sich vor den Hauptschneiden (5) ein größerer Spanraum (20), was zu einer Verbesserung der Bohrmehlabfuhr führt. Der quadratische Querschnitt des Bohrerkopfes ist demnach in diesem Fall leicht abgewandelt und rechteckförmig ausgebildet.

In der Ausführungsform der Erfindung nach Fig. 5 ist die Hauptschneide und die Nebenschneide nicht in Richtung zu den Eckbereichen des quadratischen Bohrquerschnitts, sondern senkrecht zu den Seitenflächen ausgerichtet. Dabei muß der Außendurchmesser $d_1$ der Kreuzschneide größer sein als der Umkreisdurchmesser $d_3$ durch die Ecken des quadratischen Querschnitts. Der Durchmesser $d_3$ dieses Umkreises (21) durch die Eckbereiche des quadratischen Querschnitts entspricht im allgemeinen dem Durchmesser $d_2$ des Spiralschafts.

Durch die senkrechte Anordnung der Kreuzschneide zu den Seitenflächen (8) bzw. (9) ragen die Endbereiche der Hauptschneide bzw. der Nebenschneide weit über die Schlüsselfläche hinaus. Hierdurch ergibt sich ein großer Spanraum unmittelbar vor den Schneidelementen (5, 6) der Kreuzschneide (4).

In Fig. 3 und in Draufsicht in Fig. 4 ist weiterhin die Abflachung (22) der Nebenschneide (6) dargestellt. Hierdurch ragt die Hauptschneide (5) gegenüber der Nebenschneide (6) axial hervor, was zur Erhöhung des Arbeitsdruckes führt.

In der alternativen Ausführungsform der Erfindung nach Figuren 6 und 7 sind anstelle der Nebenschneide (6) eines Kreuzschneidelements (4) Schneidstifte (23, 24) eingesetzt. Dabei ist in Fig. 6 auf der linken Seite ein Schneidstift (23) mit seiner Längsachse schräg eingesetzt, wobei dieser Schneidstift senkrecht zur Anschliffebene (25) des Bohrerkopfesoberteils steht. In der rechten Seite von Fig. 6 ist das Schneidelement (24) parallel zur Längsachse (17) eingesetzt. Die Schneidstifte (23, 24) ragen axial bis in die Schnittebene (26) des Hauptschneidelements (5) vor.

Wie in der Fig. 2 bei der Seitenfläche (8) angedeutet, kann diese Seitenfläche entweder eben, in Sonderfällen aber auch gewölbt ausgebildet sein. So ist mit den Bezugzeichen (27) eine leicht konkav, mit Bezugzeichen (28) eine leicht konvex gewölbte Seitenfläche angedeutet. Die konkave Ausbildung erhöht die Spanraumfläche, die konvexe Ausbildung erhöht die Festigkeit. Dabei ist die konvexe Ausbildung der Seitenfläche in ihrem Umkreis stets kleiner ausgebildet, als es dem Durchmesser $d_2$ des Spiralschafts entspricht.

Die Erfindung ist nicht auf das dargestellte und beschriebene Ausführungsbeispiel beschränkt. Sie umfaßt auch vielmehr alle fachmännischen Abwandlungen und Weiterbildungen ohne eigenen erfinderischen Gehalt. So kann insbesondere anstelle der Kreuzschneide (4) auch ein einfaches Schneidelement, dargestellt durch die Hauptschneide (5), verwendet werden.

## Patentansprüche

1. Gesteinsbohrer mit eingängigem oder Zweigängigem Spiralschaft (3) und einstückig hiermit verbundenem Bohrerkopf (2) mit wenigstens einer, sich über den gesamten Durchmesser des Bohrerkopfes (2) erstreckenden Schneidplatte (5) aus Hartmetall, die über die Umfangskontur des Bohrerkopfes (2) hinausragt, dadurch gekennzeichnet, daß der Bohrerkopf (2) im Querschnitt quadratisch oder nahezu quadratisch ausgebildet ist, mit weitgehend parallel zur Bohrerlängsachse (17) ausgerichteten Seitenflächen (8, 9), die seitliche Abflachungen für den Bohrmehltransport bilden, wobei die Schlüsselweite ($1_1$, $1_2$) der Abflachungen (8, 9) kleiner ist als der Außendurchmesser ($d_2$) des Spiralschafts (3) und daß der Bohrerkopf (2) zu den Eckbereichen (18) oder zu den Seitenflächen (8, 9) des Bohrerkopfes hin ausgerichtete Kreuzschneidplatten (5, 6) aufweist, von denen wenigstens die Hauptschneidplatte (5) dachförmig geneigt ausgebildet ist.

2. Bohrer nach Anspruch 1, dadurch gekennzeichnet, daß wenigstens zwei gegenüberliegende Seitenflächen (8, 8') nahezu mit dem radial außen liegenden Endbereich der Schneidplatte (5) bzw. der Hauptschneide (5) eines Kreuzschneidelements (4) fluchten und daß die beiden anderen Seitenflächen (9, 9') radial nach innen zurückversetzt sind.

3. Bohrer nach Anspruch 1, dadurch gekennzeichnet, daß die senkrecht zu den Seitenflächen (8, 9) ausgerichteten Schneidelemente (5, 6) einen Außenkreisdurchmesser $d_1$ bilden, der größer ist als die Umfangskontur (21) des Bohrerkopfes.

4. Bohrer nach Anspruch 1, dadurch gekennzeichnet, daß die Schneidplatten (5, 6) eines Kreuzschneidelements (4) durch ineinander greifende Nuten zusammengesetzt und in die Kreuznut (7) des Bohrerkopfes eingelötet sind, wobei die untere Nebenschneide (6) in ihrem oberen, der Bohrerspitze zugewandten Bereich (22) abgeflacht (22) ausgebildet ist, derart, daß die Hauptschneide (5) mit ihrer V-förmigen Spitze hervorragt.

5. Bohrer nach Anspruch 4, dadurch gekennzeichnet, daß anstelle einer Nebenschneide (6) eines Kreuzschneidelements (4) Schneidstifte (23, 24) angeordnet sind, die parallel zur Bohrerlängsachse (17) oder senkrecht zur Anschliffebene (25) des Bohrerkopfs ausgerichtet sind und deren Spitzen in der Schneidebene der Hauptschneide (5) liegen.

6. Bohrer nach einem oder mehreren der vorhergehenden Ansprüche, dadurch gekennzeichnet, daß die Seitenflächen (8, 9) konkav (27) oder konvex (28) ausgebildet sind.

## Claims

1. Rock drill with a single-thread or double-thread spiral shaft (3) and drill head (2) connected in one piece therewith, with at least one cutting tip (5) of hard metal extending over the entire diameter of the drill head (2), which cutting tip (5) projects beyond the peripheral contour of the drill head (2), characterised in that the drill head (2) has a square or approximately square cross section, with side faces (8,9) aligned extensively parallel to the longitudinal axis (17) of the drill, which form lateral flat portions for conveying fine drillings, the width over the flats($1_1$, $1_2$) of the flat portions (8,9) being less that the outer diameter ($d_2$) of the spiral shaft (3) and that the drill head (2) comprises cross-cutting tips (5,6) aligned with the corner regions (18) or with the side faces (8,9) of the drill head, of which at least the main cutting tip (5) is constructed to be inclined in the shape of a roof.

2. Drill according to Claim 1, characterised in that at least two opposing side faces (8,8') align virtually with the radially outer end region of the cutting tip (5) or of the main cutting edge (5) of a cross-cutting member (4) and that the two other side faces (9,9') are set back radially inwards.

3. Drill according to Claim 1, characterised in that the cutting members (5,6) aligned perpendicularly to the side faces (8,9) form an outer diameter ($d_1$), which is larger than the peripheral contour (21) of the drill head.

4. Drill according to Claim 1, characterised in that the cutting tips (5,6) of a cross-cutting member (4) are composed of grooves engaging one in the other and are soldered in the cross groove (7) of the drill head, the lower secondary cutting edge (6) being constructed to be flattened (22) in its upper region (22) facing the drill tip so that the main cutting edge (5) projects by its V-shaped tip.

5. Drill according to Claim 4, characterised in that in place of a secondary cutting edge (6) of a cross-cutting member (4), cutting pins (23,24) are provided, which are aligned parallel with the longitudinal axis (17) of the drill or perpendicularly to the grinding plane (25) of the drill head and whereof the tips lie in the cutting plane of the main cutting edge (5).

6. Drill according to one or more of the preceding Claims, characeised in that the side faces (8,9) are constructed to be concave (27) or convex (28).

**Revendications**

1. Fleuret à rocher comportant un arbre hélicoïdal (3) à un ou deux filets et une tête de fleuret (2) reliée en une pièce à celui-ci, avec au moins une plaquette de coupe (5) en métal dur, s'étendant sur tout le diamètre de la tête (2) du fleuret, qui fait saillie du contour périphérique de la tête (2) du fleuret, caractérisé en ce que la tête (2) du fleuret présente une section transversale quadratique ou approximativement quadratique, comportant des faces latérales (8,9) générale ment orientées parallèlement à l'axe longitudinal (17) du fleuret, qui forment des méplats latéraux pour le transport de la poussière de forage, la largeur ($1_1$ $1_2$) des méplats (8,9) étant plus petite que le diamètre externe ($d_2$) de l'arbre hélicoïdal (3), et en ce que la tête (2) du fleuret présente des plaquettes de coupe en croix (5,6) orientées vers les coins (18) ou vers les faces latérales (8,9) de la tête du fleuret, desquelles au moins la plaquette de coupe principale (5) est inclinée en forme de toit.

2. Fleuret selon la revendication 1, caractérisé en ce qu'au moins deux faces latérales opposées (8,8') sont pratiquement à fleur de la zone d'extrémité radialement externe de la plaquette de coupe (5) ou du tranchant principal (5) d'un élément de coupe en croix (4), et en ce que les deux autres faces latérales (9,9') sont radialement décalées vers l'intérieur.

3. Fleuret selon la revendication 1, caractérisé en ce que les éléments de coupe (5,6) orientés perpendiculairement aux faces latérales (8,9) présentent un diamètre ($d_1$) de cercle externe, qui est plus grand que le contour périphérique (21) de la tête du fleuret.

4. Fleuret selon la revendication 1, caractérisé en ce que les plaquettes de coupe (5,6) d'un élément de coupe en croix (4) sont assemblées par des rainures s'engageant l'une dans l'autre et sont soudées dans la rainure en croix (7) de la tête du fleuret, le tranchant secondaire inférieur (6) présentant un méplat dans sa zone supérieure (22) proche de la pointe du fleuret, de sorte que le tranchant principal (5) fait saillie par sa pointe en forme de V.

5. Fleuret selon la revendication 4, caractérisé en ce que, à la place d'un tranchant secondaire (6) d'un élément de coupe en croix (4), sont agencées des tiges de coupe (23,24), qui sont orientées parallèlement à l'axe longitudinal (17) du fleuret ou perpendiculairement au plan de rectification (25) de la tête du fleuret et dont les pointes se trouvent dans le plan de coupe du tranchant principal (5).

6. Fleuret selon une ou plusieurs des revendications précédentes, caractérisé en ce que les faces latérales (8,9) sont concaves (27) ou convexes (28).

Fig 1

Fig 3

Fig 6

Fig 2

Fig 4

Fig 7

Fig 5